# DEMANDE DE BREVET EUROPEEN

(11) **EP 3 276 491 A1**
(43) Date de publication de la demande: **31.01.2018**
(21) Numéro de dépôt: 17182251.3
(22) Date de dépôt: 20.07.2017
(51) Int. Cl.: G06F 11/16, G06F 11/32, G06F 11/14

(54) **DISPOSITIF ET PROCÉDÉ D'AFFICHAGE D'UN DOCUMENT**

(30) Priorité: 28.07.2016 FR 1657267
(71) Demandeur: Airbus (S.A.S.), 31700 Blagnac (FR)
(72) Inventeur: BERRAJAA, Jaouad, 31830 PLAISANCE DU TOUCH (FR); DUFOUR, Joel, 31490 BRAX (FR)
(74) Mandataire: Sarraméa, Claude

(57) **Abrégé**

Le dispositif d'affichage (10) d'un document comporte :
- un écran d'affichage (14) ;
- une interface homme machine (18) ;
- une première zone de mémorisation (MEM1) et au moins une deuxième zone de mémorisation (MEM2) distincte de la première zone de mémorisation, configurées de façon à contenir des informations similaires ; et
- une unité de traitement (12) configurée pour exécuter un premier processus (Proc1) et au moins un deuxième processus (Proc2) lorsqu'une requête d'affichage est reçue par l'interface homme machine, ces processus comprenant les étapes suivantes :
. lire respectivement des premières informations dans la première zone de mémorisation et des deuxièmes informations dans la deuxième zone de mémorisation, ces informations correspondant à la requête d'affichage ;
et
. produire respectivement une première couche d'affichage (Lay1) et une deuxième couche d'affichage (Lay2) associées à l'écran d'affichage,

la première couche d'affichage et la deuxième couche d'affichage étant affichées en superposition sur l'écran d'affichage.

## Description

L'invention est relative au domaine de l'affichage d'un document sur un dispositif de visualisation, en particulier dans un cockpit d'un aéronef.

Les aéronefs sont livrés aux compagnies aériennes utilisatrices avec une documentation permettant l'utilisation desdits aéronefs. Cette documentation comprend généralement un ensemble de manuels, parmi lesquels un manuel de vol AFM (« Airplane Flight Manual » en anglais), un manuel d'opération de l'aéronef FCOM (« Flight Crew Operating Manual » en anglais), un manuel de formation de l'équipage FCTM (« Flight Crew Techniques Manual » en anglais), ainsi qu'un manuel rapide de référence QRH (« Quick Reference Handbook » en anglais). Jusqu'à il y a quelques années, ces différents manuels étaient livrés sous forme papier. Afin de réduire leur masse, à l'exception du manuel rapide de référence QRH, ces manuels sont maintenant livrés sous la forme de fichiers électroniques, consultables en particulier au moyen d'un ordinateur portable, d'une tablette tactile ou d'un écran d'affichage du cockpit de l'aéronef. Toutefois, le manuel rapide de référence QRH est encore livré sous forme papier. En effet, ce manuel est utilisé à bord de l'aéronef par un seul membre d'équipage, contrairement aux autres manuels qui sont utilisés par deux membres d'équipage équipés chacun d'un dispositif électronique tel qu'un ordinateur portable ou une tablette tactile. Or, les autorités de sûreté aérienne exigent que l'affichage des manuels sur un tel dispositif électronique permette la détection d'une erreur d'affichage par les membres d'équipage lorsque l'utilisation, par un membre d'équipage, des informations affichées sur un tel dispositif électronique est susceptible d'avoir un caractère critique pour le vol de l'aéronef. En ce qui concerne les manuels utilisés par deux membres d'équipage, la détection des erreurs d'affichage peut s'appuyer sur une vérification croisée des informations affichées sur ces dispositifs électroniques. Par contre, en ce qui concerne le manuel rapide de référence QRH, dans la mesure où celui-ci est utilisé par un seul membre d'équipage, une telle vérification croisée n'est pas possible. Il existe donc un besoin d'une solution permettant d'utiliser un affichage du manuel rapide de référence QRH sur un dispositif électronique tout en satisfaisant aux exigences des autorités de sûreté aérienne.

### EXPOSE DE L'INVENTION :

La présente invention a notamment pour but d'apporter une solution à ces problèmes. Elle concerne un dispositif d'affichage d'un document, le dispositif comportant :
- un écran d'affichage ;
- une interface homme machine ;
- une première zone de mémorisation ; et
- une unité de traitement configurée pour exécuter un premier processus lorsqu'une requête d'affichage est reçue par l'interface homme machine, ce premier processus comprenant les étapes suivantes :
   - lire des premières informations correspondant à la requête d'affichage, dans la première zone de mémorisation ; et
   - produire une première couche d'affichage associée à l'écran d'affichage, en fonction des premières informations.

Ce dispositif est remarquable en ce qu'il comporte en outre au moins une deuxième zone de mémorisation distincte de la première zone de mémorisation, la première zone de mémorisation et la deuxième zone de mémorisation étant configurées de façon à contenir des informations similaires, et l'unité de traitement est en outre configurée pour exécuter au moins un deuxième processus lorsque la requête d'affichage est reçue par l'interface homme machine, ce deuxième processus comprenant les étapes suivantes :
- lire des deuxièmes informations correspondant à la requête d'affichage, dans la deuxième zone de mémorisation ;
- produire une deuxième couche d'affichage associée à l'écran d'affichage, en fonction des deuxièmes informations,
la première couche d'affichage et la deuxième couche d'affichage étant affichées simultanément en superposition sur l'écran d'affichage.

Ainsi, si une erreur d'affichage vient à se produire sur l'une des couches d'affichage, l'affichage sur l'écran est alors incohérent car il résulte de la superposition d'au moins deux couches d'affichage qui sont différentes. L'utilisateur du dispositif d'affichage peut ainsi voir que l'affichage sur l'écran est incohérent. Cela lui permet de prendre conscience du fait qu'il ne doit alors pas faire confiance aux informations affichées sur l'écran. Par contre, si l'affichage sur l'écran est cohérent, cet affichage résulte de la superposition de couches d'affichage identiques et l'utilisateur peut faire confiance aux informations affichées sur l'écran. Le dispositif d'affichage permet donc à un utilisateur de détecter une éventuelle erreur d'affichage et ainsi de savoir s'il peut ou non faire confiance aux informations affichées sur l'écran.

Selon une première alternative, la première zone de mémorisation et la deuxième zone de mémorisation correspondent à deux zones d'adresses distinctes d'une même mémoire physique.

Selon une deuxième alternative, la première zone de mémorisation et la deuxième zone de mémorisation correspondent à deux mémoires physiques distinctes.

Selon une troisième alternative, le dispositif d'affichage étant relié à un réseau de communication auquel sont également reliés un premier serveur et un deuxième serveur, la première zone de mémorisation correspond à une zone de mémorisation du premier serveur et la deuxième zone de mémorisation correspond à une zone de mémorisation du deuxième serveur.

Selon une première variante, le premier processus et le deuxième processus sont similaires.

Selon une deuxième variante, le premier processus et le deuxième processus correspondent à des fonctions logicielles codées de façon différente.

Dans un mode particulier de réalisation, le premier processus et le deuxième processus sont synchrones.

Dans un autre mode particulier de réalisation, le premier processus et le deuxième processus sont asynchrones.

De façon avantageuse, l'unité de traitement est configurée pour vérifier la correspondance des informations contenues dans la première zone de mémorisation et des informations contenues dans la deuxième zone de mémorisation, avant la consultation du document par un utilisateur.

L'invention est également relative à un procédé d'affichage d'un document sur un dispositif d'affichage, le dispositif d'affichage comportant :
- un écran d'affichage ;
- une interface homme machine ;
- une première zone de mémorisation ; et
- une unité de traitement,
le procédé comportant l'exécution d'un premier processus par l'unité de traitement lorsqu'une requête d'affichage est reçue par l'interface homme machine, ce premier processus comprenant les étapes suivantes :
- lire des premières informations correspondant à la requête d'affichage, dans la première zone de mémorisation ; et
- produire une première couche d'affichage associée à l'écran d'affichage, en fonction des premières informations.
Ce procédé est remarquable en ce que, le dispositif d'affichage comportant en outre au moins une deuxième zone de mémorisation distincte de la première zone de mémorisation, la première zone de mémorisation et la deuxième zone de mémorisation étant configurées de façon à contenir des informations similaires, le procédé comporte l'exécution d'un deuxième processus par l'unité de traitement lorsque la requête d'affichage est reçue par l'interface homme machine, ce deuxième processus comprenant les étapes suivantes :
- lire des deuxièmes informations correspondant à la requête d'affichage, dans la deuxième zone de mémorisation ;
- produire une deuxième couche d'affichage associée à l'écran d'affichage, en fonction des deuxièmes informations,
la première couche d'affichage et la deuxième couche d'affichage étant affichées en superposition sur l'écran d'affichage.

### DESCRIPTION DETAILLEE :

L'invention sera mieux comprise à la lecture de la description qui suit et à l'examen des figures annexées.
La figure 1 représente, de façon schématique, un dispositif d'affichage conforme à un mode de réalisation de l'invention.
La figure 2 illustre un exemple d'affichage sur un dispositif d'affichage conforme à un mode de réalisation de l'invention.

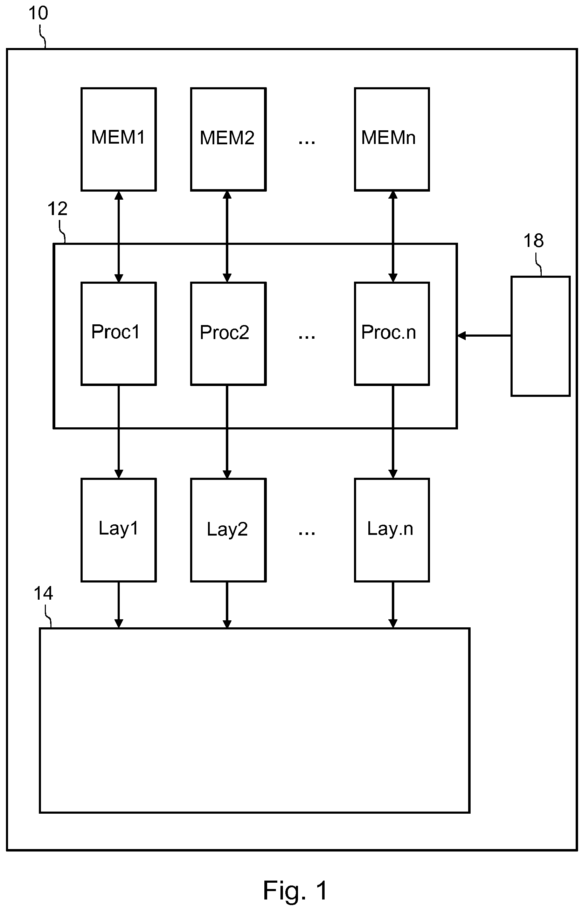

Le dispositif d'affichage 10 représenté sur la figure 1 comporte un ensemble de zones de mémorisation MEM1, MEM2 ... MEMn distinctes les unes des autres. Les différentes zones de mémorisation sont configurées de façon à contenir des informations similaires. Le dispositif d'affichage comprend également une unité de traitement 12 (comprenant notamment un microprocesseur ou un microcontrôleur), ainsi qu'un écran d'affichage 14 auquel sont associées des couches d'affichage Lay1, Lay2 ... Lay.n. Ces couches d'affichage correspondent par exemple à des zones de mémorisation définies dans une mémoire d'affichage associée à l'écran d'affichage ou dans une mémoire du dispositif d'affichage 10. Le dispositif d'affichage comprend aussi une interface homme machine 18 reliée à l'unité de traitement 12. Dans un premier exemple, cette interface homme machine correspond à une souris et/ou un clavier ; dans un deuxième exemple, elle correspond à une surface tactile de l'écran d'affichage 14. Le nombre n de zones de mémorisation et de couches d'affichage est un nombre entier supérieur ou égal à 2. Pour plus de commodité, la suite de la description est basée sur un nombre n égal à 2, sans que cela soit limitatif quant au nombre de zones de mémorisation et de couches d'affichage du dispositif d'affichage 10.

En fonctionnement, lorsqu'un utilisateur demande l'affichage d'une partie d'un document en faisant une requête d'affichage au moyen de l'interface homme machine 18 qui reçoit cette requête, l'interface homme machine transmet cette requête à l'unité de traitement 12. L'unité de traitement 12 exécute alors un premier processus Proc1 comprenant les étapes suivantes :
- lire des premières informations correspondant à la requête d'affichage, dans la première zone de mémorisation MEM1 ; et
- produire une première couche d'affichage Lay1 associée à l'écran d'affichage 14, en fonction des premières informations.

L'unité de traitement exécute également un deuxième processus Proc2 comprenant les étapes suivantes :
- lire des deuxièmes informations correspondant à la requête d'affichage, dans la deuxième zone de mémorisation MEM2 ;
- produire une deuxième couche d'affichage Lay2 associée à l'écran d'affichage, en fonction des deuxièmes informations.
La première couche d'affichage Lay1 et la deuxième couche d'affichage Lay2 sont affichées simultanément en superposition sur l'écran d'affichage. Le fond de chacune des couches est considéré transparent de façon à permettre la superposition des différentes couches sur l'écran d'affichage 14.

Ainsi, les deux processus redondants Proc1 et Proc2 produisent indépendamment deux couches d'affichage Lay1 et Lay2 sur la base d'informations respectivement enregistrées dans les zones de mémorisation MEM1 et MEM2. Ces deux couches d'affichage sont superposées sur l'écran d'affichage 14. Ainsi, s'il se produit une erreur dans l'une des zones de mémorisation MEM1 ou MEM2, dans le traitement des informations par l'un des processus Proc1 ou Proc2 ou encore dans une mémoire utilisée pour enregistrer l'une des couches d'affichage Lay1 ou Lay2, alors les deux couches d'affichage sont différentes et leur superposition produit un affichage incohérent. L'utilisateur du dispositif d'affichage 10 peut alors facilement s'apercevoir du fait que cet affichage est incohérent, ce qui le dissuade d'en tenir compte.

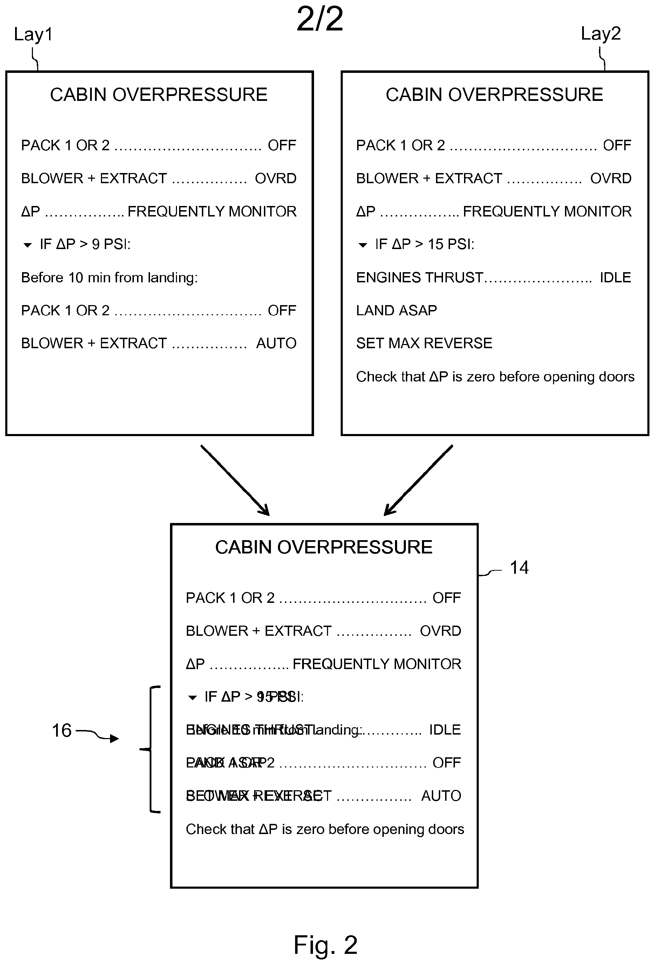

Dans l'exemple illustré par la figure 2, la partie inférieure de l'affichage correspondant à la deuxième couche Lay2 est différente de la partie inférieure de la première couche Lay1. L'affichage résultant, sur l'écran d'affichage 14, de la superposition de la première couche et de la deuxième couche, est incohérent pour un ensemble de lignes 16, ce qui permet à un utilisateur de prendre conscience d'un problème d'affichage.

Selon une première alternative, les différentes zones de mémorisation MEM1, MEM2 ... MEMn sont définies dans une même mémoire physique, par exemple une mémoire (circuit intégré) de l'unité de traitement 12 ou encore une carte mémoire reliée à l'unité de traitement 12. Les différentes zones de mémorisation correspondent alors à des zones d'adresses distinctes de ladite mémoire physique. En cas de défaillance d'une cellule ou d'un ensemble de cellules mémoire d'une zone de mémorisation, la défaillance des cellules correspondantes d'une autre zone de mémorisation est peu probable. Cela permet de produire des couches d'affichage distinctes dans le cas d'une telle défaillance et donc de détecter cette défaillance.

Selon une deuxième alternative, les différentes zones de mémorisation MEM1, MEM2 ... MEMn correspondent à des mémoires physiques distinctes. Ces mémoires physiques distinctes correspondent par exemple à plusieurs mémoires (circuits intégrés) de l'unité de traitement 12 ou encore à plusieurs cartes mémoires reliées à l'unité de traitement 12. En cas de défaillance d'une cellule ou d'un ensemble de cellules mémoire d'une mémoire, la défaillance des cellules correspondantes d'une autre mémoire est peu probable. Cela permet de produire des couches d'affichage distinctes dans le cas d'une telle défaillance et donc de détecter cette défaillance.

Selon une troisième alternative, le dispositif d'affichage 10 est relié à un réseau de communication auquel sont également reliés plusieurs serveurs. Les différentes zones de mémorisation MEM1, MEM2 ... MEMn sont alors définies dans les différents serveurs. En cas de défaillance d'une cellule ou d'un ensemble de cellules mémoire sur un serveur, la défaillance des cellules correspondantes sur un autre serveur est peu probable. Cela permet de produire des couches d'affichage distinctes dans le cas d'une telle défaillance et donc de détecter cette défaillance.

Selon une première variante, les différents processus Proc1, Proc2 ... Proc.n sont similaires. Ils correspondent par exemple à plusieurs instances d'une même fonction logicielle. Il est peu probable qu'un problème tel par exemple qu'un parasite électrique puisse perturber de façon similaire ces différentes instances de la fonction logicielle. Il en résulte que les différentes instances de la fonction logicielle produisent alors des couches d'affichage distinctes, ce qui permet de détecter un problème d'affichage. Il est considéré ici que la fonction logicielle a été testée et validée avec un niveau d'assurance qualité suffisant. L'objectif n'est pas de détecter un problème de programmation de la fonction logicielle, mais un problème d'exécution, tel par exemple que le parasite électrique précité.

Selon une deuxième variante, les différents processus Proc1, Proc2 ... Proc.n correspondent à des fonctions logicielles codées d'au moins deux façons différentes. Outre la détection d'un problème d'exécution, comme dans la première variante, cette deuxième variante permet en outre de détecter un comportement différent des différentes fonctions logicielles, dû par exemple à un problème de programmation.

Dans un mode particulier de réalisation, les différents processus Proc1, Proc2 ... Proc.n sont synchrones. Ils sont alors par exemple exécutés de façon concomitante dans un environnement informatique temps réel.

Dans un autre mode particulier de réalisation, les différents processus Proc1, Proc2 ... Proc.n sont asynchrones. Ils sont par exemple exécutés de façon séquentielle. Cela permet de produire et d'afficher plus rapidement une première couche d'affichage.

De façon avantageuse, les différentes couches d'affichage correspondent à des couleurs d'affichage différentes. Par exemple, dans le cas de deux couches d'affichage Lay1 et Lay2 telles que représentées sur la figure 2, la première couche d'affichage Lay1 est affichée de couleur noire en premier plan et la deuxième couche d'affichage est affichée de couleur rouge en arrière-plan. Ainsi, en l'absence de différence entre les deux couches d'affichage, la première couche masque totalement l'affichage de la deuxième couche et l'affichage résultant sur l'écran d'affichage 14 est entièrement de couleur noire. Par contre, s'il existe une différence entre les deux couches d'affichage, au moins une partie de la deuxième couche d'affichage est visible sur l'écran d'affichage 14. Par conséquent, l'écran d'affichage 14 comporte au moins une partie de couleur rouge, ce qui permet à un utilisateur de détecter plus facilement un problème d'affichage.

De façon avantageuse encore, l'unité de traitement est configurée pour vérifier la correspondance des informations contenues dans les différentes zones de mémorisation MEM1, MEM2 ... MEMn avant la consultation du document par un utilisateur. Dans un premier mode de réalisation, l'unité de traitement 12 effectue la vérification de la correspondance des informations à la suite d'un chargement desdites informations dans les différentes zones de mémorisation. Par exemple, le dispositif d'affichage 10 comporte un port de communication (notamment de type USB®, de type Ethernet, de type WiFi®, etc.) et un utilisateur raccorde, à ce port de communication, un dispositif (tel qu'une clef USB, un ordinateur portable, etc.) contenant un ensemble d'informations préalablement validées correspondant à un ou plusieurs documents affichables par le dispositif d'affichage 10. L'utilisateur configure alors le dispositif d'affichage 10 dans un mode de fonctionnement permettant le chargement desdites informations. Lorsque le chargement des informations dans les différentes zones de mémorisation est terminé, l'unité de traitement exécute un processus, par exemple une fonction logicielle, de comparaison des informations enregistrées dans les différentes zones de mémorisation, de façon à vérifier la correspondance des informations enregistrées dans les différentes zones de mémorisation. En cas de différence entre les informations enregistrées dans différentes zones de mémorisation, l'unité de traitement signale une erreur à l'utilisateur. Dans un deuxième mode de réalisation, pouvant être combiné avec le premier mode de réalisation, l'unité de traitement effectue la vérification de la correspondance des informations contenues dans les différentes zones de mémorisation lors du démarrage du dispositif d'affichage 10. Selon une première variante ce démarrage du dispositif d'affichage 10 correspond au démarrage d'un système d'exploitation du dispositif d'affichage 10; selon une deuxième variante, ce démarrage correspond au démarrage d'une application logicielle prévue pour permettre la consultation du ou des documents enregistré(s) dans les différentes zones de mémorisation.

Dans un mode particulier de réalisation, le dispositif d'affichage 10 est utilisé dans un cockpit d'aéronef et correspond à un ordinateur portable de type EFB (« Electronic Flight Bag » en anglais). De façon particulière, un document enregistré dans le dispositif d'affichage 10 est un manuel rapide de référence QRH. Les informations enregistrées dans les différentes zones de mémorisation MEM1, MEM2... MEMn sont des informations relatives à ce manuel rapide de référence QRH.

## Revendications

1. Dispositif d'affichage (10) d'un document, le dispositif comportant :
- un écran d'affichage (14) ;
- une interface homme machine (18) ;
- une première zone de mémorisation (MEM1) ; et
- une unité de traitement (12) configurée pour exécuter un premier processus (Proc1) lorsqu'une requête d'affichage est reçue par l'interface homme machine, ce premier processus comprenant les étapes suivantes :
. lire des premières informations correspondant à la requête d'affichage, dans la première zone de mémorisation ; et
. produire une première couche d'affichage (Lay1) associée à l'écran d'affichage, en fonction des premières informations,
**caractérisé en ce que** le dispositif comporte en outre au moins une deuxième zone de mémorisation (MEM2) distincte de la première zone de mémorisation, la première zone de mémorisation et la deuxième zone de mémorisation étant configurées de façon à contenir des informations similaires, et l'unité de traitement est en outre configurée pour exécuter au moins un deuxième processus (Proc2) lorsque la requête d'affichage est reçue par l'interface homme machine, ce deuxième processus comprenant les étapes suivantes :
. lire des deuxièmes informations correspondant à la requête d'affichage, dans la deuxième zone de mémorisation ;
. produire une deuxième couche d'affichage (Lay2) associée à l'écran d'affichage, en fonction des deuxièmes informations,
la première couche d'affichage et la deuxième couche d'affichage étant affichées en superposition sur l'écran d'affichage.

2. Dispositif d'affichage selon la revendication 1, **caractérisé en ce que** la première zone de mémorisation et la deuxième zone de mémorisation correspondent à deux zones d'adresses distinctes d'une même mémoire physique.

3. Dispositif d'affichage selon la revendication 1, **caractérisé en ce que** la première zone de mémorisation et la deuxième zone de mémorisation correspondent à deux mémoires physiques distinctes.

4. Dispositif d'affichage selon la revendication 1, **caractérisé en ce que**, le dispositif d'affichage étant relié à un réseau de communication auquel sont également reliés un premier serveur et un deuxième serveur, la première zone de mémorisation correspond à une zone de mémorisation du premier serveur et la deuxième zone de mémorisation correspond à une zone de mémorisation du deuxième serveur.

5. Dispositif d'affichage selon l'une quelconque des revendications précédentes, **caractérisé en ce que** le premier processus et le deuxième processus sont similaires.

6. Dispositif d'affichage selon l'une quelconque des revendications 1 à 4, **caractérisé en ce que** le premier processus et le deuxième processus correspondent à des fonctions logicielles codées de façon différente.

7. Dispositif d'affichage selon l'une quelconque des revendications précédentes, **caractérisé en ce que** le premier processus et le deuxième processus sont synchrones.

8. Dispositif d'affichage selon l'une quelconque des revendications 1 à 6, **caractérisé en ce que** le premier processus et le deuxième processus sont asynchrones.

9. Dispositif d'affichage selon l'une quelconque des revendications précédentes, **caractérisé en ce que** l'unité de traitement est configurée pour vérifier la correspondance des informations contenues dans la première zone de mémorisation et des informations contenues dans la deuxième zone de mémorisation, avant la consultation du document par un utilisateur.

10. Dispositif d'affichage selon l'une quelconque des revendications précédentes, **caractérisé en ce que** les informations enregistrées dans la première zone de mémorisation et dans l'au moins une deuxième zone de mémorisation sont relatives à un manuel de référence rapide QRH d'un aéronef.

11. Procédé d'affichage d'un document sur un dispositif d'affichage (10), le dispositif d'affichage comportant :
- un écran d'affichage (14) ;
- une interface homme machine (18) ;
- une première zone de mémorisation (MEM1) ; et
- une unité de traitement (12),
le procédé comportant l'exécution d'un premier processus (Proc1) par l'unité de traitement lorsqu'une requête d'affichage est reçue par l'interface homme machine, ce premier processus comprenant les étapes suivantes :
. lire des premières informations correspondant à la requête d'affichage, dans la première zone de mémorisation ; et
. produire une première couche d'affichage (Lay1) associée à l'écran d'affichage, en fonction des premières informations,
**caractérisé en ce que**, le dispositif d'affichage (10) comportant en outre au moins une deuxième zone de mémorisation (MEM2) distincte de la première zone de mémorisation, la première zone de mémorisation et la deuxième zone de mémorisation étant configurées de façon à contenir des informations similaires, le procédé comporte l'exécution d'un deuxième processus (Proc2) par l'unité de traitement lorsque la requête d'affichage est reçue par l'interface homme machine, ce deuxième processus comprenant les étapes suivantes :
. lire des deuxièmes informations correspondant à la requête d'affichage, dans la deuxième zone de mémorisation ;
. produire une deuxième couche d'affichage (Lay2) associée à l'écran d'affichage, en fonction des deuxièmes informations,
la première couche d'affichage et la deuxième couche d'affichage étant affichées en superposition sur l'écran d'affichage.
